# EUROPEAN PATENT APPLICATION

(11) **EP 4 435 899 A1**
(43) Date of publication of application: **25.09.2024**
(21) Application number: 23846915.9
(22) Date of filing: 20.07.2023
(51) Int. Cl.: H01M 4/62, H01M 10/42, H01M 4/13, H01M 4/139, H01M 4/02

(54) **SECONDARY BATTERY ELECTRODE INSULATION COMPOSITION IN WHICH DIFFERENT TYPES OF BINDERS ARE BLENDED, PREPARATION METHOD THEREFOR, AND SECONDARY BATTERY ELECTRODE COMPRISING INSULATION COMPOSITION**

(30) Priority: 27.07.2022 KR 20220093079
(71) Applicant: LG Energy Solution, Ltd., Seoul 07335 (KR)
(72) Inventor: JANG, Seong Keun, Daejeon 34122 (KR); CHOI, Sang A, Daejeon 34122 (KR); YOON, Sung Soo, Daejeon 34122 (KR)
(74) Representative: Plasseraud IP
(86) International application number: PCT/KR2023/010523
(87) International publication number: WO 2024/025256

(57) **Abstract**

Disclosed herein relates to an insulation composition blended with a non-aqueous solvent-dispersed aqueous binder and a non-aqueous binder, wherein the insulation composition can prevent gelation with an active material slurry while having excellent wet adhesion when applied as an electrode insulating layer, and is effectively applicable to a process of co-coating an active material slurry and an insulation composition.

## Description

### [Technical Field]

This application claims the benefit of priority to Korean Patent Applications No. 10-2022-0093079, filed on July 27, 2022, the disclosure of which is incorporated herein by reference in its entirety.

The present invention relates to an insulation composition blended with heterogeneous binders, a manufacturing method thereof, and a secondary battery electrode including the insulation composition.

### [Background Technology of the Invention]

With the development of technology and the increasing demand for mobile devices, the demand for secondary batteries as an energy source is increasing rapidly, and a lot of research is being done on batteries that can meet various needs.

One of the main research challenges in these secondary batteries is to improve their safety. The main cause of safety-related accidents in batteries is reaching abnormally high temperatures due to short circuits between a positive electrode and negative electrode. In other words, under normal circumstances, a separator is placed between the positive electrode and negative electrode to maintain electrical isolation, but under abnormal circumstances, such as when the battery is overcharged or overdischarged, when dendritic growth or debris in the electrode material causes an internal short circuit, when a sharp object such as a nail or screw penetrates the battery, when the battery is subjected to excessive deformation by external forces, etc., the conventional separator has its limitations. Various methods have been tried to reduce the probability of short-circuiting the electrodes under such external shock or high temperature conditions. For example, in order to solve the internal short circuit of the battery, it has been proposed to attach insulating tape to the non-coated part of the electrode and part of the active material layer, or to form an insulating layer by coating it with an insulating liquid.

Conventionally, a non-aqueous binder (e.g., PVDF) is used to coat the insulating layer of the electrode. However, the insulating layer formed by a non-aqueous binder has a problem of poor adhesion (hereinafter referred to as wet adhesion) when impregnated with an electrolyte solution, which cannot prevent the migration of lithium ions to the overlay region of the electrode, resulting in the expression of capacity.

Therefore, research has been conducted on the use of aqueous binders such as styrene-butadiene rubber (SBR) as the insulating layer of an electrode. In order to form an insulating layer with an aqueous binder, water is used as a solvent in the process of preparing the coating solution. However, there is a limitation in that in electrodes, especially the positive electrode, the active material components are very susceptible to moisture. Therefore, the use of water as a solvent can cause damage to the positive electrode active material layer.

Furthermore, if the insulation composition for forming the insulating layer includes an aqueous binder, there is a limitation that gelation occurs upon contact with the non-aqueous binder contained in the active material slurry.

Therefore, there is a need to develop a new insulation composition with good wet adhesion and that do not generate gelation with the binders contained in the active material slurry.

### [Description of the Invention]

### [Technical Problem]

Accordingly, it is an object of the present invention to provide an insulation composition applicable as an insulating layer for an electrode and having excellent processability, a method for manufacturing the insulation composition, and an electrode including the insulation composition.

### [Technical Solution]

To address the problems described above, an insulation composition for secondary battery electrodes according to an exemplary embodiment of the present invention is blended with non-aqueous solvent-dispersed aqueous binders and non-aqueous binders.

In an exemplary embodiment, the insulation composition for a secondary battery electrode includes: a non-aqueous solvent-dispersed aqueous binder, and a binder matrix blended with non-aqueous binders; and inorganic particles dispersed within the binder matrix.

In a specific example, the insulation composition for a secondary battery electrode includes: 5 to 50 parts by weight of non-aqueous solvent-dispersed aqueous binder; 5 to 50 parts by weight of non-aqueous binder; and 30 to 90 parts by weight of inorganic particles.

In a specific example, the insulation composition for a secondary battery electrode according to the present invention further includes a non-aqueous organic solvent. For example, the non-aqueous organic solvent includes one or more species selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butyrene carbonate (BC), methylpropyl carbonate (MPC), ethylpropyl carbonate (EPC), acetonitrile, dimethoxyethane, tetrahydrofuran (THF), γ-butyrolactone, methyl alcohol, ethyl alcohol, and isopropyl alcohol.

For example, the non-aqueous solvent is N-methyl-pyrrolidone (NMP), the aqueous binder is styrene-butadiene rubber (SBR), and the non-aqueous binder is polyvinylidene fluoride (PVDF).

As another example, the inorganic particles are one or more among boehmite (AlOOH) and alumina (Al₂O₃).

In one example, the insulation composition has a viscosity in the range of 50 cP to 50,000 cP at 25°C.

In addition, the present invention provides a manufacturing method of a aforementioned insulation composition for a secondary battery electrode. In one example, manufacturing method of an insulation composition for a secondary battery electrode according to the present invention includes: manufacturing a non-aqueous solvent-dispersed aqueous binder by evaporating an aqueous solvent from the mixture of a aqueous binder dispersed in an aqueous solvent and a non-aqueous solvent; and manufacturing a blended binder by mixing a non-aqueous solvent-dispersed aqueous binder with a non-aqueous binder.

In one example, manufacturing a blended binder includes mixing inorganic particles.

In another example, manufacturing a non-aqueous solvent-dispersed aqueous binder is performed by evaporating an aqueous solvent by a heat treatment of a mixture of an aqueous binder dispersed in an aqueous solvent and a non-aqueous binder.

For example, the heat treatment is performed in the range of 80 to 150°C.

In addition, the present invention provides a secondary battery electrode including an insulating layer formed by using the aforementioned insulation composition for a secondary battery electrode. In one example, the secondary battery electrode according to the present invention includes: an electrode current collector; an active material layer formed on one or both sides of the electrode current collector; and an insulating layer formed on one or both sides of the electrode current collector, but including an insulating layer located in an edge region of the active material layer. In addition, the insulating layer is a composition blended with a non-aqueous solvent-dispersed aqueous binder and a non-aqueous binder.

In a specific example, the insulating layer is a composition in which inorganic particles are dispersed within a binder matrix blended with a non-aqueous solvent-dispersed aqueous binder and a non-aqueous binder.
For example, the insulating layer has an average thickness (Dₐᵥₑ) in the range of 1 to 50 µm.

For example, the secondary battery electrode is a positive electrode.

### [Advantageous Effects]

The insulation composition according to the present invention, when applied as an electrode insulating layer, has excellent wet adhesion while preventing gelation caused by the application of a heterogeneous binder between the active material slurry and the insulation composition, and can be effectively applied to a process of co-coating the active material slurry and the insulation composition.

### [Brief Description of the Drawings]

FIG. 1 is a photograph of a metal specimen manufactured according to Example 1.
FIGS. 2 through 4 are graphs showing thickness variation profiles for a positive electrode specimen with insulating layers.
FIG. 5 is a graph showing the results of the capacity expression evaluation for half cells.

### [Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

In the present invention, "insulating coating layer" means an insulating member formed by applying and drying at least a portion of the non-coated part of the electrode current collector to at least a portion of the electrode active material layer.

In the present invention, "wet adhesion" refers to the adhesion of an insulating coating layer measured while impregnated in an electrolyte solution. More specifically, the wet adhesion can be measured by impregnating a metal specimen with an insulating coating layer in an electrolyte solution, applying ultrasonic waves, and checking for swelling or deintercalation of the insulating coating layer.

Hereinafter, the present invention will be described in more detail.

The present invention relates to an insulation composition and is applicable as an insulation composition for a secondary battery electrode. Specifically, the present invention provides an insulation composition that is applied as an insulating layer formation located in an edge region of an electrode active material layer in the process of manufacturing a secondary battery electrode.

Conventionally, non-aqueous binders have been used as a positive electrode insulating layer. However, the insulating layer applied with a non-aqueous binder has the limitation of poor wet adhesion when impregnated with electrolyte. Meanwhile, using an aqueous binder for the positive electrode insulating layer has the problem of using water as a solvent. The positive electrode contains a large amount of lithium, which, when in contact with water, rapidly decreases its safety and can cause a fire in severe cases. In addition, there is a problem that the slurry for the insulating layer and the slurry for the positive electrode active material layer cannot be coated simultaneously using a non-aqueous binder. Specifically, gelation occurs between the slurry for the insulating layer and the slurry for the positive electrode active material layer due to different binder applications.

The present invention addresses these problems by providing an insulation composition in which a non-aqueous solvent-dispersed aqueous binder and a non-aqueous binder are blended. Specifically, the present invention provides an aqueous binder that does not contain "water" through solvent substitution. This eliminates a factor that degraded safety when applied to a positive electrode. Furthermore, the use of an aqueous binder prevents deterioration of the wet adhesion when impregnated in an electrolyte. In addition, the present invention does not cause gelation with the binder components contained in the slurry for the positive electrode active layer through blending with non-aqueous binders.

In one specific embodiment, an insulation composition according to the present invention includes a non-aqueous solvent-dispersed aqueous binder, a binder matrix in which the non-aqueous binder is blended; and inorganic particles dispersed within the binder matrix. The insulation composition, by including the inorganic particles, increases the insulating properties and enables a more uniform insulating layer to be formed.

In an exemplary embodiment, an insulation composition according to the present invention may include a non-aqueous solvent-dispersed aqueous binder and a non-aqueous binder in a ratio of 5 to 95 : 5 to 95 parts by weight. More specifically, the content ratio of the non-aqueous solvent-dispersed aqueous binder to the non-aqueous binder may be, based on parts by weight, in the range of 10 to 90: 10 to 90, 30 to 80: 20 to 70, 40 to 60: 40 to 60, 35 to 55: 45 to 65, or 45 to 65: 35 to 55.

In addition, the insulation composition according to the present invention may further include inorganic particles. In this case, for example, the insulation composition includes 5 to 50 parts by weight of a non-aqueous solvent-dispersed aqueous binder; 5 to 50 parts by weight of a non-aqueous binder; and 30 to 90 parts by weight of inorganic particles. Alternatively, the insulation composition includes 20 to 55 parts by weight of a non-aqueous solvent-dispersed aqueous binder; 20 to 55 parts by weight of a non-aqueous binder; and 10 to 80 parts by weight of inorganic particles. Alternatively, the insulation composition includes 25 to 50 parts by weight of a non-aqueous solvent-dispersed aqueous binder; 25 to 50 parts by weight of a non-aqueous binder; and 20 to 50 parts by weight of inorganic particles.

In an exemplary embodiment, the aqueous binder is selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluorinated rubber, polytetrafluoroethylene, polyethylene, polypropylene, ethylene propylene copolymer, polyethylene oxide, polyvinylpyrrolidone, polypichlorohydrin, polyphosphazene, polyacrylonitrile, polystyrene, ethylene propylene diene copolymer, polyvinylpyridine, chlorosulfonated polyethylene, latex, polyester resin, acrylic resin, phenolic resin, epoxy resin, polyvinyl alcohol, hydroxypropylmethylcellulose, hydroxypropylcellulose, and diacetylcellulose. For example, the aqueous binder may be a styrene-butadiene rubber.

The present invention performs a pretreatment using a solvent-substitution method when applying the aqueous binder. For example, the aqueous binder is applied in a state in which the aqueous binder, "water," is substituted with an organic solvent. The solvent-substitution method may be performed in a state in which the aqueous binder dispersed in the aqueous solvent is mixed with a non-aqueous solvent, and the aqueous solvent is volatilized and removed by heat treatment.

In the present invention, by applying a "solvent-dispersed" aqueous binder, the wet adhesion of the insulating layer can be increased without causing inter-binder gelation.

In an exemplary embodiment, the non-aqueous binder may include one or more resins selected from the group consisting of polyvinylidenefluoride, polyvinylidenefluoride-hexafluoropropylene copolymer (PVDF-co-HFP), polyvinylidenefluoride, polyacrylonitrile, polymethylmethacrylate, and copolymers thereof. In one example, the non-aqueous binder may include polyvinylidenefluoride.

In the present invention, by using a non-aqueous binder, it is possible to increase the adhesion of the active material layer, especially the positive electrode active material layer applied with a PVDF binder, and to suppress the occurrence of inter-binder gelation.

Moreover, the inorganic particles may be one or more selected from the group consisting of, for example, AlOOH, Al₂O₃, γ-AlOOH, Al(OH)₃, Mg(OH)₂, Ti(OH)₄, MgO, CaO, Cr₂O₃, MnO₂, Fe₂O₃, Co₃O₄, NiO, ZrO₂, BaTiO₃, SnO₂, CeO₂, Y₂O₃, SiO₂, silicon carbide (SIC) and boron nitride (BN). In a specific example, the inorganic particles may be one or more selected from the group consisting of AlOOH, Al₂O₃, γ-AlOOH and Al(OH)₃. For example, the inorganic particle may be one or more among boehmite (AlOOH) and alumina (Al₂O₃), or AlOOH.

The average particle diameter of the inorganic particles may be from 0.1 µm to 100 µm; from 0.5 µm to 80 µm; from 1 µm to 50 µm; from 2 µm to 30 µm; from 3 µm to 20 µm; or from 5 µm to 10 µm.

In the present invention, an insulation composition containing inorganic particles is provided, which increases insulation properties and enables a more uniform insulating layer to be formed.

In another exemplary embodiment, the insulation composition according to the present invention further includes a non-aqueous organic solvent. For example, non-aqueous organic solvents included in the insulation composition may be one or more selected from the group consisting of N-methyl-pyrrolidone (NMP), dimethylformamide (DMF) and dimethylacetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), gamma-butyrolactone, methyl alcohol, ethyl alcohol, and isopropyl alcohol.

In a specific example, the non-aqueous organic solvent may be one or more selected from the group consisting of N-methyl-pyrrolidone (NMP), dimethylformamide (DMF), dimethylacetamide (DMAc), and dimethylsulfoxide (DMSO), and may be one or more selected from the group consisting of N-methyl-pyrrolidone (NMP), dimethylformamide (DMF), and dimethylacetamide (DMAc).

For example, the non-aqueous organic solvent may be an amide-based organic solvent, the same as solvent used in the preparation of the positive electrode slurry, and the non-aqueous organic solvent may be N-methyl-pyrrolidone (NMP).

In another aspect, the insulation composition may use the same non-aqueous organic solvent as the slurry for the positive electrode active material layer. When the same solvent is used for the positive electrode active layer slurry and the insulation composition, crack formation due to boiling point differences during drying can be suppressed.

In one example, in an insulation composition according to the present invention, the non-aqueous solvent may be N-methyl-pyrrolidone (NMP), the aqueous binder may be styrene-butadiene rubber (SBR), and the non-aqueous binder may be polyvinylidene fluoride (PVDF).

In yet another exemplary embodiment, the insulating composition has a viscosity in the range of 50 cP to 50,000 cP at 25°C. Specifically, the insulation composition may have a viscosity at 25°C of 50 cP to 50,000 cP, 100 cP to 45,000 cP, 1,000 cP to 40,000 cP, 2,000 cP to 35,000 cP, 3,000 cP to 30,000 cP, 4,000 cP to 20,000 cP, 5,000 cP to 10,000 cP, and may improve adhesion to the electrode active material layer, improve coating, processability, and the like when in the above range.

In addition, the present invention also provides a method of manufacturing the insulation composition described above. In one embodiment, a manufacturing method of an insulation composition according to the present invention includes,
manufacturing a non-aqueous solvent-dispersed aqueous binder by evaporating an aqueous solvent from the mixture of a aqueous binder dispersed in an aqueous solvent and a non-aqueous solvent; and
manufacturing a blended binder by mixing a non-aqueous solvent-dispersed aqueous binder with a non-aqueous binder.

In the present invention, the "solvent-substitution" method eliminates the aqueous solvent, e.g., water, used for dispersing the aqueous binder.

In addition, by substituting the aqueous binder with a non-aqueous solvent, the blending effect with the non-aqueous binder can be improved.

In an exemplary embodiment, manufacturing the blended binder may include mixing inorganic particles. By mixing the inorganic particles, the insulating properties can be increased and a more uniform insulating layer can be formed.

In yet another exemplary embodiment, in manufacturing non-aqueous solvent-dispersed aqueous binder, the mixture of an aqueous binder dispersed in an aqueous solvent and a non-aqueous binder is subjected to heat treatment to evaporate the aqueous solvent. By doing so, the aqueous solvent is substituted with a non-aqueous solvent. In addition to the above, it is also possible to apply ultrasonic waves in combination with the heat treatment.

In a specific example, the heat treatment can be performed in the range of 80 to 150°C. For example, the heat treatment can be performed in a range from 80 to 130°C, a range from 90 to 120°C, or a range from 100 to 120°C. For example, when the aqueous solvent is "water", the heat treatment temperature can be in the vicinity of about 100°C, but the heat treatment temperature can be lowered by forming a pressurization condition or the like.

The present invention also provides a secondary battery electrode with the aforementioned insulation composition applied. Specifically, the insulation composition can be applied as an insulating layer to insulate a boundary region between a non-coated part and a coated part in the manufacture of a secondary battery electrode.

In an exemplary embodiment, a secondary battery electrode according to the present invention includes an electrode current collector; an active material layer formed on one or both sides of the electrode current collector; and an insulating layer formed on one or both sides of the electrode collector but located in an edge region of the active material layer. In addition, the insulating layer is a composition in which a non-aqueous solvent-dispersed aqueous binder and a non-aqueous binder are blended.

In an exemplary embodiment, the insulating layer is a composition in which inorganic particles are dispersed within a binder matrix blended with a non-aqueous solvent-dispersed aqueous binder and a non-aqueous binder. Here, the non-aqueous solvent-dispersed aqueous binder, the non-aqueous binder, and the inorganic particles are the same as described above.

In yet another exemplary embodiment, the insulating layer has an average thickness (Dₐᵥₑ) in the range of 1 to 50 µm. For example, the average thickness (Dₐᵥₑ) of the insulating layer is in the range of 3 to 20 µm, in the range of 5 to 20 µm, or in the range of 5 to 15 µm.

In addition, the secondary battery positive electrode according to the invention includes a structure in which an insulating layer is formed to cover a portion of the slurry for the positive electrode active material layer applied to the current collector from a portion of the non-coated part of the current collector. In a boundary region between the insulating layer and the active material layer, the insulating layer, for example, does not include a section in which the thickness of the insulating layer is less than or equal to 30% of the average thickness (Dₐᵥₑ) of the insulating layer. Here, the boundary region between the insulating layer and the active material layer, based on the cross-sectional structure, refers to a region from the starting region where the insulating layer is applied to the point where the thickness of the insulating layer exceeds the average thickness (Dₐᵥₑ) before reaching the region where the active material is applied.

For example, the secondary battery electrode does not exclude a negative electrode, but specifically refers to a secondary battery positive electrode.

Specifically, the positive electrode can be manufactured by applying a slurry for a positive electrode active material layer to one or both sides of a current collector. In this case, the positive electrode for the lithium secondary battery according to the present invention may use as the current collector a material having a high conductivity without causing chemical changes in the battery. For example, one or more among stainless steel, aluminum, nickel, titanium, and calcined carbon can be used, and in the case of aluminum or stainless steel, those that are surface-treated with one or more among carbon, nickel, titanium, and silver can be used. For example, the current collector may be aluminum

Furthermore, in the slurry for the positive electrode active material, the positive electrode active material may be any positive electrode active material conventionally used in positive electrodes, and may include, but is not limited to, lithium manganese oxide, lithium cobalt oxide, lithium nickel oxide, lithium iron oxide, or lithium composite oxide, which is a combination thereof.

Non-aqueous binders included in the slurry for the positive electrode active material may include one or more resins selected from the group consisting of polyvinylidenefluoride, polyvinylidenefluoride-hexafluoropropylene copolymer (PVDF-co-HFP), polyvinylidenefluoride. polyacrylonitrile, polymethylmethacrylate, and copolymers thereof. In one example, the binder may include polyvinylidenefluoride.

In this case, the conductive material may be used to improve the performance, such as electrical conductivity, of the positive electrode, and may include one or more species selected from the group consisting of natural graphite, artificial graphite, carbon black, acetylene black, ketjen black, and carbon fiber. For example, the conductive material may include acetylene black.

A secondary battery positive electrode according to the present invention includes a structure in which an insulation composition is applied to cover a portion of a slurry for a positive electrode active material layer applied to the current collector from a portion of a non-coated part of the current collector. Here, the slurry for the positive electrode active material layer may be in an undried state. As used herein, "undried" may mean a slurry that has not undergone a separate drying process in a drying device or equipment.

As previously described, the slurry for the insulating coating layer can be co-coated on the current collector with the slurry for the positive electrode active material layer.

In addition, the secondary battery electrode can be manufactured by drying the slurry for the positive electrode active material layer applied to the current collector and the insulation composition. In a specific example, the process of drying the slurry for the positive electrode active material layer applied to the current collector and the insulation composition may be performed at a temperature range of 50°C to 300°C on average.

The process of drying the slurry for the positive electrode active material layer and the insulation composition can be carried out by drying methods conventionally known in the art to completely dry the slurry for the positive electrode active material layer and the insulating coating layer to remove the solvent. In a specific example, the drying can be applied by modifying a hot air method, a direct heating method, an induction heating method, etc. at a temperature at which all of the solvent is volatilized, but it is not limited thereto.

In this case, the drying temperature may be in the temperature range of 50°C to 300°C, 60°C to 200°C, or 70°C to 150°C. The process of coating and drying the slurry for the positive electrode active material and insulation composition on the current collector may further include rolling.

### [Mode for Carrying out the Invention]

Hereinafter, the present invention will be described in more detail by way of examples and experimental examples.

However, the following examples and experimental examples are only illustrative of the present invention, and the contents of the present invention are not limited to the following examples and experimental examples.

### Example 1.

To 100 g of styrene-butadiene rubber (hereinafter referred to as SBR, BM451B from ZEON) binder dispersed in water as a solvent in a 60 : 40 ratio (parts by weight), 500 g of N-methyl-2-pyrrolidone (NMP) solvent was added and stirred. Then, the stirred mixture was heated at 100 to 120 °C for 2 hours to evaporate the water contained therein to prepare the NMP-substituted SBR binder. Then, the NMP-substituted SBR binder and the PVDF binder were mixed and stirred in a 50:50 weight ratio to prepare an insulation composition. The prepared insulation composition had a viscosity of 5,000 cP.

### Example 2.

Inorganic particles, boehmite (AlOOH), were added to the insulation composition prepared in Example 1 and stirred. The mixing ratio of NMP-substituted SBR binder, PVDF binder, and inorganic particles was adjusted to be weight ratio of 20:20:60.

### Examples 3 to 5.

In preparing the insulation composition, the insulation composition was obtained in the same manner as in Example 2, except that the type and content of the binder and the inorganic particle content and the like were changed as disclosed in Table 1.

### Comparative Example 1.

A commercially available PVDF binder was used as the insulation composition. The insulation composition was controlled to a viscosity of 5,000 cP using NMP solvent.

### Comparative Example 2.

An insulation composition was obtained by mixing a commercially available PVDF binder with inorganic particles of boehmite (AlOOH) in a 50:50 parts by weight ratio and controlling the viscosity to 5,000 cP using NMP solvent.

### Comparative Example 3.

An insulation composition was obtained by mixing a commercially available SBR binder with inorganic particle boehmite (AlOOH) in a 50:50 parts by weight ratio and controlling the viscosity to 5,000 cP using a water solvent.

### Comparative Example 4.

A separate NMP solvent substitution process was not applied to the SBR binder. During the process of mixing the SBR binder with the PVDF binder, it was found that severe gelation occurred, resulting in a composition that was not coatable.

The specific compositions of Examples 1-5 and Comparative Examples 1-4 are shown in Table 1 below.

**Table 1]**

| Category | Solvent-dispersed aqueous binder | Non-aqueous binder | Inorganic particle | Aqueous binder: Non-aqueous binder: Inorganic particles (weight ratio) |
|---|---|---|---|---|
| Example 1 | NMP substituted SBR | PVDF | AlOOH | 50:50:0 |
| Example 2 | NMP substituted SBR | PVDF | AlOOH | 30:30:40 |
| Example 3 | NMP substituted SBR | PVDF | AlOOH | 30:40:30 |
| Example 4 | NMP substituted SBR | PVDF | AlOOH | 40:30:30 |
| Example 5 | NMP substituted SBR | PVDF | AlOOH | 25:25:50 |
| Comparative Example 1 | SBR | PVDF | AlOOH | 0:100:0 |
| Comparative Example 2 | SBR | PVDF | AlOOH | 0:50:50 |
| Comparative Example 3 | SBR | PVDF | AlOOH | 50:0:50 |
| Comparative Example 4 | SBR | PVDF | AlOOH | 50:50:0 |

### Experimental Example 1. Measuring the wet adhesion of an insulating coating layer

To evaluate the adhesion of the insulating coating layer according to the present invention, the following experiments were performed.

### Metal specimen formed with an insulating coating layer

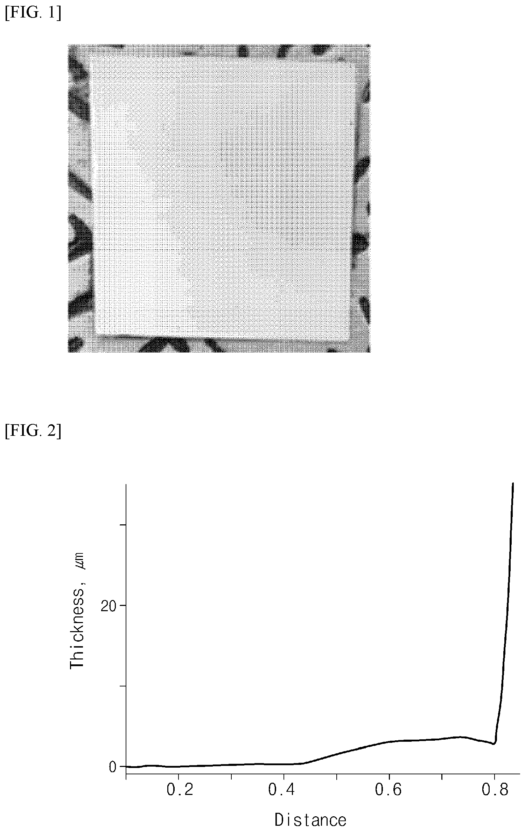

The insulation compositions prepared in Examples 1 to 4 and Comparative Examples 1 and 2 were coated on an aluminum metal foil and dried to prepare a metal specimen formed with an insulating layer having an average thickness of about 10 µm. The metal specimen having the above insulating layer formed was punched in a size of 2 cm x 2 cm using a punching machine for measuring adhesion. FIG. 1 is a photograph of a metal specimen prepared according to Example 1.

### Applying ultrasonic waves

In a 250 ml beaker, 200 g of electrolyte EC/EMC=3/7 (vol.%) was added, and a metal specimen formed with an insulating layer was impregnated in the electrolyte. To control the movement of the metal specimen, the metal specimen was fixed with a jig.

Then, ultrasonic waves were applied to the electrolyte impregnated with the metal specimen using an ultrasonic disperser (BANDELIN, 4200). Here, the ultrasonic application conditions were as follows.
- Frequency: 20 kHz
- Tip diameter: 13 mm (TS-113)
- Amplitude: 100%

### (Peak-to-peak 132 µm when using a 13 mm tip)

Then, the results were shown in Table 2 below.

**[Table 2]**

| Category | Example 1 | Example 2 | Example 3 | Example 4 | Comparative Example 1 | Comparative Example 2 |
|---|---|---|---|---|---|---|
| Time(minute s) | 19 | 19 | 19 | 15 | 5 | 10 |
| Ending temperature (°C) | 109 | 109 | 109 | 100 | 71 | 87 |
| Wet adhesion comparison | No swelling and deintercalation | No swelling and deintercalation | No swelling and deintercalation | No swelling and deintercalation | Swelling occurred | Swelling and deintercalation occurred |

According to Table 2, the metal specimen of Example 1 did not experience any swelling or deintercalation in the insulating coating layer. However, for the metal specimen of Example 1, the boiling point of the EMC was 107.5°C due to the increase in the temperature of the electrolyte by ultrasonic application, and the measurement stopped when it reached 109°C due to the evaporation of the solvent and the change in the measurement environment.

In addition, the metal specimens in Examples 2 through 4 did not experience any swelling or deintercalation in the insulating coating layer, as in Example 1. However, the boiling point of EMC was 107.5°C, and the measurement was stopped when it reached 109°C due to the evaporation of the solvent and the change in the measurement environment.

Moreover, the metal specimens in Comparative Examples 1 and 2 exhibited swelling within 5 minutes of applying ultrasonic waves to the electrolyte. In particular, the metal specimen in Comparative Example 2 exhibited deintercalation along with swelling.

This confirmed that the insulating layers of Examples 1 through 4 had superior wet adhesion to the insulating layers of Comparative Examples 1 and 2.

### Experimental Example 3. Evaluating coating processability of insulation compositions

A slurry for the positive electrode active material layer was prepared by weighing 96 parts by weight of LiNi_{0.8}Co_{0.1}Mn_{0.1}O₂ as the positive electrode active material, 2 parts by weight of PVdF as the binder, and 2 parts by weight of carbon black as the conductive material and mixing them in N-methylpyrrolidone (NMP) solvent. The slurry for the positive electrode active material layer was applied to aluminum foil, dried, and rolled to produce a positive electrode having a positive electrode active material layer (average thickness: 130 µm).

Then, a positive electrode was prepared by coating an insulation composition on an edge portion of the positive electrode active material layer with a thickness of about 10 µm and drying it in a convection oven (130°C).

For the prepared positive electrode specimens, the thickness of the insulating layer was measured. The measurement results are shown in FIGS. 2 to 4. In FIGS. 2 to 4, the x-axis is a relative representation of the distance at which the insulating layer is formed, and after the x-axis value of 0.8, it is a region in which the active material layer is formed. In addition, the y-axis represents the thickness (*µ*m).

FIG. 2 shows a variation in thickness of an electrode specimen in which an insulating layer was formed on the electrode using the insulation composition (PVDF) according to Comparative Example 1. Referring to FIG. 2, it can be seen that the insulation composition according to Comparative Example 1 does not exceed a maximum thickness of more than 5 µm as the insulating layer spreads during the application and drying process. After the point where the x-axis value is 0.8, it reflects the thickness of the active material layer.

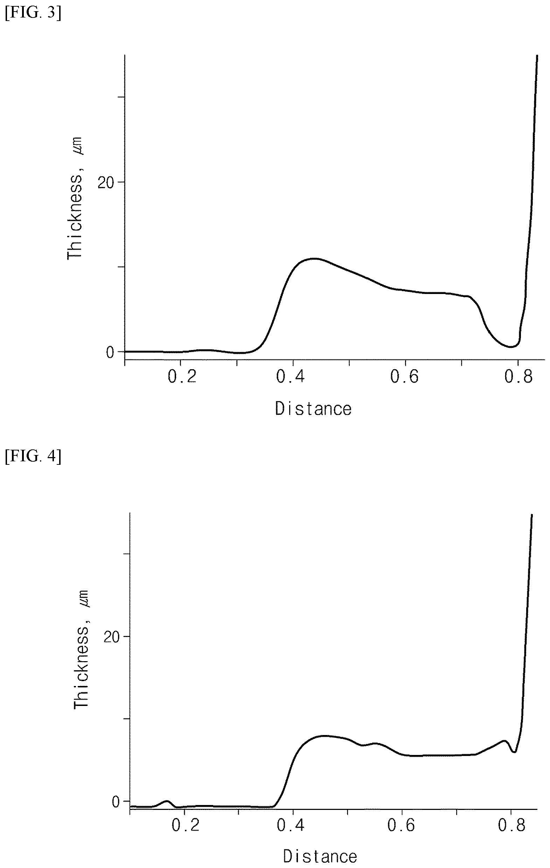

FIG. 3 shows a variation in thickness of an electrode specimen in which an insulating layer was formed on the electrode using the insulation composition (SBR + AlCOOH) according to Comparative Example 3. Referring to FIG. 3, it can be seen that the insulation composition according to Comparative Example 3 has an average thickness of about 8 µm in the range of 0.3 to 0.8 along the x-axis (boundary region). However, at the point of 0.8 along the x-axis, the thickness of the insulating layer decreases rapidly to a point of about 2 µm. This means that the coating uniformity decreases rapidly in the boundary region with the active material layer when the insulating layer is formed.

FIG. 4 shows a variation in thickness of an electrode specimen in which an insulating layer was formed on the electrode using the insulation composition (NMP-substituted SBR + PVDF + AlCOOH) according to Example 2. Referring to FIG. 4, it can be seen that the insulation composition according to Example 2 has an average thickness of about 8 µm in the range of 0.3 to 0.8 along the x-axis (boundary region). Furthermore, when compared to FIG. 3, it is observed that the thickness of the insulating layer does not decrease rapidly at the point 0.8 along the x-axis. This means that the coating uniformity is excellent in the boundary region with the active material layer when forming the insulating layer.

### Experimental Example 4. Evaluating capacity expression in battery cells

The performance of the battery was evaluated after applying the positive electrode active material layer using the insulation composition according to the present invention. Specifically, to evaluate the performance of the positive electrode, a half cell was prepared and the capacity expression was evaluated.

### Preparing half cells

A slurry for the positive electrode active material layer was prepared by weighing 96 parts by weight of LiNi_{0.8}Co_{0.1}Mn_{0.1}O₂ as the positive electrode active material, 2 parts by weight of PVDF as the binder, and 2 parts by weight of carbon black as the conductive material, and mixing them in N-methylpyrrolidone (NMP) solvent. The slurry for the positive electrode active material layer was applied to aluminum foil, dried, and rolled to produce a positive electrode having a positive electrode active material layer (average thickness: 130 µm).

Then, the insulation composition was coated on the surface of the positive electrode with a thickness of about 10 µm and dried in a convection oven (130°C), and the positive electrode was prepared. Lithium foil was used as the negative electrode, and coin-type half cells were prepared using an electrolyte containing 1 M of LiPF6 in a solvent with EC:DMC:DEC=1:2:1.

### Evaluating capacity expression

For each cell, capacity expression was evaluated by charging and discharging at 45°C with a 0.1C condition.

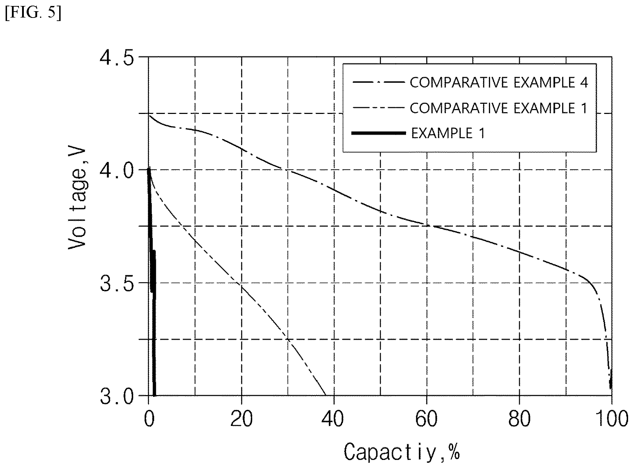

FIG. 5 shows the results of the capacity expression evaluation. In FIG. 5, Example 1 is when the positive electrode surface is coated with the insulation composition (NMP-substituted SBR + PVDF) according to Example 1. Comparative Example 1 is when the positive electrode surface is coated with the insulation composition (PVDF) according to Comparative Example 1. Furthermore, Comparative Example 4 is a case where the positive electrode surface is not coated with an insulation composition.

In Comparative Example 4, the expressed capacity was 100%, while in Comparative Example 1, the cell capacity was about 40%.

In comparison, Example 1 shows a cell capacity of less than 1%. This means that when coated with the insulation composition of Example 1, there is very little migration of lithium ions.

From these results, it seems that the insulating coating layer has excellent wet adhesion in the electrolyte, which prevents the migration of lithium ions in the overlay region of the electrode, thereby inhibiting capacity expression during discharge.

## Claims

1. An insulation composition for a secondary battery electrode blended with non-aqueous solvent-dispersed aqueous binders and non-aqueous binders.

2. The insulation composition for a secondary battery electrode of claim 1, comprising:
the non-aqueous solvent-dispersed aqueous binder, and a binder matrix blended with the non-aqueous binders; and
inorganic particles dispersed within the binder matrix.

3. The insulation composition for a secondary battery electrode of claim 2, comprising:
5 to 50 parts by weight of the non-aqueous solvent-dispersed aqueous binder;
5 to 50 parts by weight of the non-aqueous binder; and
30 to 90 parts by weight of the inorganic particles.

4. The insulation composition for a secondary battery electrode of claim 1, wherein
the insulation composition for a secondary battery electrode further comprises a non-aqueous organic solvent, wherein
the non-aqueous organic solvent includes one or more species selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butyrene carbonate (BC), methylpropyl carbonate (MPC), ethylpropyl carbonate (EPC), acetonitrile, dimethoxyethane, tetrahydrofuran (THF), γ-butyrolactone, methyl alcohol, ethyl alcohol, and isopropyl alcohol.

5. The insulation composition for a secondary battery electrode of claim 1, wherein
the non-aqueous solvent is N-methyl-pyrrolidone (NMP),
the aqueous binder is styrene-butadiene rubber (SBR), and
the non-aqueous binder is polyvinylidene fluoride (PVDF).

6. The insulation composition for a secondary battery electrode of claim 2, wherein
the inorganic particles are one or more among boehmite (AlOOH) and alumina (Al₂O₃).

7. The insulation composition for a secondary battery electrode of claim 1, wherein
the insulation composition has a viscosity in the range of 50 cP to 50,000 cP at 25°C.

8. A manufacturing method of an insulation composition for a secondary battery electrode comprising:
manufacturing a non-aqueous solvent-dispersed aqueous binder by evaporating an aqueous solvent from the mixture of a aqueous binder dispersed in the aqueous solvent and a non-aqueous solvent; and
manufacturing a blended binder by mixing the non-aqueous solvent-dispersed aqueous binder with a non-aqueous binder.

9. The manufacturing method of an insulation composition for a secondary battery electrode of claim 8, wherein
manufacturing a blended binder comprises mixing inorganic particles.

10. The manufacturing method of an insulation composition for a secondary battery electrode of claim 8, wherein
manufacturing a non-aqueous solvent-dispersed aqueous binder comprises:
evaporating the aqueous solvent by a heat treatment of the mixture of the aqueous binder dispersed in the aqueous solvent and the non-aqueous binder.

11. The manufacturing method of an insulation composition for a secondary battery electrode of claim 10, wherein
the heat treatment is performed in the range of 80 to 150°C.

12. A secondary battery electrode comprising:
an electrode current collector;
an active material layer formed on one or both sides of the electrode current collector; and
an insulating layer formed on one or both sides of the electrode current collector, but including an insulating layer located in an edge region of the active material layer, wherein
the insulating layer is a composition blended with a non-aqueous solvent-dispersed aqueous binder and a non-aqueous binder.

13. The secondary battery electrode of claim 12, wherein
the insulating layer is a composition in which inorganic particles are dispersed within a binder matrix blended with the non-aqueous solvent-dispersed aqueous binder and the non-aqueous binder.

14. The secondary battery electrode of claim 12, wherein
the insulating layer has an average thickness (Dₐᵥₑ) in the range of 1 to 50 µm.

15. The secondary battery electrode of claim 12, wherein
the secondary battery electrode is a positive electrode.
